# EUROPEAN PATENT APPLICATION

(11) **EP 4 456 196 A1**
(43) Date of publication of application: **30.10.2024**
(21) Application number: 22911116.6
(22) Date of filing: 16.12.2022
(51) Int. Cl.: H01M 4/525, C01G 53/00, H01M 4/36, H01M 4/505

(54) **POSITIVE ELECTRODE ACTIVE MATERIAL FOR SECONDARY BATTERY AND METHOD FOR PRODUCING POSITIVE ELECTRODE ACTIVE MATERIAL FOR SECONDARY BATTERY**

(30) Priority: 20.12.2021 JP 2021206182
(71) Applicant: Panasonic Energy Co., Ltd., Osaka 570-8511 (JP)
(72) Inventor: TOCHIO, Takaya, Kadoma-shi, Osaka 571-0057 (JP)
(74) Representative: Novagraaf International SA
(86) International application number: PCT/JP2022/046386
(87) International publication number: WO 2023/120413

(57) **Abstract**

A positive electrode active material for a secondary battery, which is one aspect of the present disclosure, is characterized by including a lithium-containing composite oxide composed of secondary particles in which primary particles are aggregated, and by that the lithium-containing composite oxide contains Ni at 85 mol% or more with respect to the total molar amount of metal elements excluding lithium, and Al, the Al concentration in the vicinity of the surface of the secondary particles is higher than the Al concentration in the central portion of the secondary particles, and a metal element M (M is at least one of Mg, Ca, Sr, Na, K, Zr, Co, Nb, W, and Mo) at 0.01-2.0 mol% and sulfate ions at 0.02 mol% or more with respect to the molar amount of the lithium-containing composite oxide are present on the surface of the primary particles.

## Description

### TECHNICAL FIELD

The present disclosure relates to a positive electrode active material for a secondary battery and a method for producing a positive electrode active material for a secondary battery.

### BACKGROUND

As a positive electrode active material for a secondary battery such as a lithium ion secondary battery, for example, Patent Literature 1 discloses a lithium-containing composite oxide obtained by heating at least one of a nickel-containing hydroxide or a nickel-containing oxide and a lithium compound. The lithium-containing composite oxide is represented by the following General Formula (3): LiNiMO₂ (in the formula, M represents at least one or more elements of a transition metal other than Ni, an alkaline earth metal element, Al, Ga, In, and Si), and is a monodispersed primary particle.

In addition, for example, Patent Literature 2 discloses a method for producing a positive electrode active material, the method including: a coprecipitation step of obtaining a coprecipitated hydroxide of nickel and cobalt; a mixing step of mixing the coprecipitated hydroxide obtained in the coprecipitation step with an aluminum compound and lithium hydroxide to obtain a precursor; and a baking step of baking the precursor obtained in the mixing step, in producing a positive electrode active material containing a compound represented by General Formula LiₓNi_{y}Co_{z}Al_{(1-y-z)}O₂ (where 0.05 ≤ x ≤ 1.10, 0.7 ≤ y ≤ 0.9, 0.05 ≤ z ≤ 0.18, and 0.85 ≤ y + z ≤ 0.98.), in which the aluminum compound used in the mixing step has an average particle size of less than or equal to 10 µm.

### CITATION LIST

### PATENT LITERATURES

Patent Literature 1: JP 2010-70431 A
Patent Literature 2: JP 2001-266876 A

### SUMMARY

Although the capacity of the secondary battery can be increased by increasing a ratio of Ni in the lithium-containing composite oxide (for example, greater than or equal to 85 mol%), there is a problem that charge and discharge cycle characteristics of the secondary battery are likely to deteriorate. Therefore, in order to improve the charge and discharge cycle characteristics, there is a method of adding a metal element other than Ni to the lithium-containing composite oxide, but simply adding the metal element causes a problem that the charge transfer resistance of the battery increases or the capacity decreases.

An object of the present disclosure is to provide a positive electrode active material for a secondary battery and a method for producing the same that can provide a high capacity secondary battery having low charge transfer resistance and excellent charge and discharge cycle characteristics.

A positive electrode active material for a secondary battery according to one aspect of the present disclosure contains a lithium-containing composite oxide composed of secondary particles in which primary particles are aggregated, in which the lithium composite oxide contains greater than or equal to 85 mol% of Ni with respect to the total molar amount of metal elements excluding lithium, and Al, an Al concentration in the vicinity of a surface of the secondary particle is higher than an Al concentration in the central portion of the secondary particle, and a metal element M (M is at least one of Mg, Ca, Sr, Na, K, Zr, Co, Nb, W, and Mo) and sulfate ions are present on a surface of the primary particle in amounts of greater than or equal to 0.01 mol% and less than or equal to 2.0 mol% and greater than or equal to 0.02 mol%, respectively, with respect to a molar amount of the lithium-containing composite oxide.

In addition, a method for producing a positive electrode active material for a secondary battery according to one aspect of the present disclosure includes a step of adding and mixing an oxide containing greater than or equal to 85 mol% of Ni with respect to the total molar amount of constituent metal elements, a lithium compound, aluminum sulfate, and a hydroxide containing a metal element M (M is at least one of Mg, Ca, Sr, Na, K, Zr, Co, Nb, W, and Mo), and baking the mixture, in which an addition amount of the hydroxide containing the metal element M is greater than or equal to 0.01 mol% and less than or equal to 2.0 mol% with respect to a molar amount of the oxide containing Ni, and an addition amount of the aluminum sulfate is greater than or equal to 0.2 mol% with respect to the molar amount of the oxide containing Ni.

According to one aspect of the present disclosure, it is possible to provide a positive electrode active material for a secondary battery and a method for producing the same that can provide a high capacity secondary battery having low charge transfer resistance and excellent charge and discharge cycle characteristics.

### BRIEF DESCRIPTION OF DRAWINGS

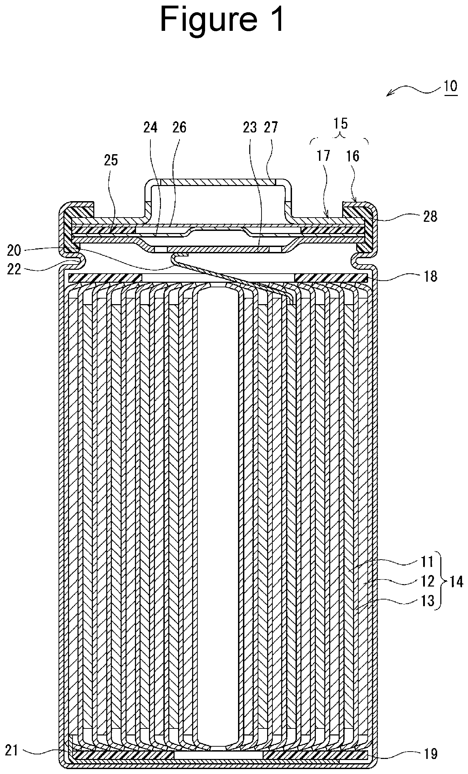

FIG. 1 is a schematic cross-sectional view of a secondary battery as an example of an embodiment.

### DESCRIPTION OF EMBODIMENTS

Hereinafter, an example of a secondary battery according to one aspect of the present disclosure will be described.

FIG. 1 is a schematic cross-sectional view of a secondary battery as an example of an embodiment. A secondary battery 10 illustrated in FIG. 1 includes a wound electrode assembly 14 formed by wounding a positive electrode 11 and a negative electrode 12 with a separator 13 interposed between the positive electrode and the negative electrode, an electrolyte, insulating plates 18 and 19 that are disposed on upper and lower sides of the electrode assembly 14, respectively, and a battery case 15 housing the members. The battery case 15 includes a bottomed cylindrical case body 16 and a sealing assembly 17 for closing an opening of the case body 16. Note that, instead of the wound electrode assembly 14, another form of an electrode assembly such as a stacked electrode assembly in which a positive electrode and a negative electrode are alternately stacked with a separator interposed therebetween may be applied. In addition, examples of the battery case 15 include a metal case having a cylindrical shape, a square shape, a coin shape, a button shape, or the like, and a resin case formed by laminating resin sheets (so-called laminate type resin case).

The electrolyte may be an aqueous electrolyte, and is preferably a non-aqueous electrolyte containing a non-aqueous solvent and an electrolyte salt dissolved in the non-aqueous solvent. As the non-aqueous solvent, for example, esters, ethers, nitriles, amides, a mixed solvent of two or more thereof, and the like are used. The non-aqueous solvent may contain a halogen-substituted product in which at least some hydrogens in these solvents are substituted with halogen atoms such as fluorine. As the electrolyte salt, for example, a lithium salt such as LiPF₆ is used. Note that the electrolyte is not limited to a liquid electrolyte, and may be a solid electrolyte using a gel polymer or the like.

The case body 16 is, for example, a bottomed cylindrical metal container. A gasket 28 is provided between the case body 16 and the sealing assembly 17 to secure a sealing property of the inside of the battery. The case body 16 has, for example, a projecting portion 22 in which a part of a side face thereof projects inside for supporting the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the respective members except for the insulating member 25 are electrically connected to each other. The lower vent member 24 and the upper vent member 26 are connected to each other at the respective central portions thereof, and the insulating member 25 is interposed between the respective circumferential parts of the vent members 24 and 26. When the internal pressure of the secondary battery 10 is increased by heat generation due to an internal short circuit or the like, for example, the lower vent member 24 is deformed so as to push the upper vent member 26 up toward the cap 27 side and is broken, and thus, a current pathway between the lower vent member 24 and the upper vent member 26 is cut off. When the internal pressure is further increased, the upper vent member 26 is broken, and gas is discharged through an opening of the cap 27.

In the secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to a lower surface of the filter 23 that is a bottom plate of the sealing assembly 17 by welding or the like, and the cap 27 that is a top plate of the sealing assembly 17 electrically connected to the filter 23 becomes a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 will be described in detail.

### [Positive Electrode]

The positive electrode 11 includes a positive electrode current collector and a positive electrode mixture layer provided on a surface of the positive electrode current collector. As the positive electrode current collector, a foil of a metal stable in a potential range of the positive electrode 11, such as aluminum, a film in which the metal is disposed on a surface layer, or the like can be used. The positive electrode mixture layer is preferably provided on both surfaces of the positive electrode current collector. The positive electrode mixture layer contains a positive electrode active material. In addition, the positive electrode mixture layer may contain a binder, a conductive agent, or the like. The positive electrode 11 can be manufactured by applying a positive electrode mixture slurry containing a positive electrode active material, a binder, a conductive agent, and the like on the positive electrode current collector, drying and then rolling the coating film, and forming a positive electrode mixture layer on the positive electrode current collector.

Examples of the conductive agent contained in the positive electrode mixture layer include carbon materials such as carbon black, acetylene black, Ketjenblack, and graphite. Examples of the binder contained in the positive electrode mixture layer include a fluorine resin such as polytetrafluoroethylene (PTFE) or polyvinylidene fluoride (PVdF), polyacrylonitrile (PAN), polyimide, an acrylic resin, a polyolefin, a cellulose derivative such as carboxymethyl cellulose (CMC) or a salt thereof, and polyethylene oxide (PEO).

The positive electrode active material includes a lithium-containing composite oxide composed of secondary particles in which primary particles are aggregated. The lithium-containing composite oxide contains greater than or equal to 85 mol% of Ni, and preferably contains greater than or equal to 90 mol% of Ni, with respect to the total molar amount of metal elements excluding lithium. As described above, a ratio of Ni is set to be high, such that it is possible to increase the capacity of the secondary battery.

An Al concentration in the vicinity of a surface of the secondary particle of the lithium-containing composite oxide is higher than an Al concentration in the central portion of the secondary particle. Here, Al present in the vicinity of the surface and in the central portion of the secondary particle may be present on the surface of the particle in the form of a compound such as a metal simple substance or an oxide, or may be incorporated into a crystal structure of the lithium-containing composite oxide and contained inside the particle.

The Al concentrations in the vicinity of the surface and in the central portion of the secondary particle are compared by the following method. A lithium-containing composite oxide and a thermosetting resin are mixed, the resin is cured to embed the lithium-containing composite oxide in the resin, particles of the lithium-containing composite oxide are subjected to cross section processing by a cross section polisher (CP) method, and the polished surface is analyzed by an energy dispersive X-ray analyzer (SEM-EDX) to measure the Al concentrations in the vicinity of the surface and in the central portion of the secondary particle of the lithium-containing composite oxide. The vicinity of the surface of the secondary particle is a range from the surface of the secondary particle to a depth of 0.5 µm.

On the surface of the primary particle of the lithium-containing composite oxide, the metal element M (M is at least one of Mg, Ca, Sr, Na, K, Zr, Co, Nb, W, and Mo) is present in an amount of greater than or equal to 0.01 mol% and less than or equal to 2.0 mol% with respect to the molar amount of the lithium-containing composite oxide. Here, the metal element M present on the surface of the primary particle is present on the surface of the primary particle in the form of, for example, a metal simple substance or a compound such as an oxide. Note that the metal element M may be incorporated into the crystal structure of the lithium-containing composite oxide and contained inside the primary particle.

The molar amount of the metal element M present on the surface of the primary particle is determined by confirming the presence of the metal element M on the surface of the primary particle of the lithium-containing composite oxide with an energy dispersive X-ray analyzer (TEM-EDX), dissolving the lithium-containing composite oxide in hydrochloric acid, and then measuring the obtained dissolution solution by ICP emission spectrometry.

In addition, on the surface of the primary particle of the lithium-containing composite oxide, sulfate ions are present in an amount of greater than or equal to 0.02 mol% with respect to the molar amount of the lithium-containing composite oxide. Here, the sulfate ions present on the surface of the primary particle are present on the particle surface in the form of, for example, a compound such as sulfate.

The molar amount of sulfate ions present on the surface of the primary particle is determined by stirring a solution in which a lithium-containing composite oxide is dispersed in pure water, and then performing ion chromatography on filtered water obtained by filtering the solution.

As described above, in the vicinity of the surface of the secondary particle of the lithium-containing composite oxide, a concentration of Al is higher than in the central portion of the secondary particle, and on the surface of the primary particle of the lithium-containing composite oxide, the metal element M (M is at least one of Mg, Ca, Sr, Na, K, Zr, Co, Nb, W, and Mo) and the sulfate ions are present in amounts of greater than or equal to 0.01 mol% and less than or equal to 2.0 mol% and greater than or equal to 0.02 mol%, respectively, with respect to the molar amount of the lithium composite oxide, such that even with a lithium composite oxide having a high ratio of Ni, it is possible to suppress a decrease in battery capacity, an increase in charge transfer resistance, and deterioration of charge and discharge cycle characteristics.

From the viewpoint that at least one of a decrease in battery capacity, an increase in charge transfer resistance, and deterioration of charge and discharge cycle characteristics can be further suppressed, the Al concentration in the vicinity of the surface of the secondary particle of the lithium-containing composite oxide is preferably greater than or equal to 1.2 times the Al concentration in the central portion of the secondary particle, and on the surface of the primary particle of the lithium-containing composite oxide, the metal element M is preferably present in an amount of greater than or equal to 0.1 mol% and less than or equal to 1.8 mol% with respect to the molar amount of the lithium-containing composite oxide, or on the surface of the primary particle of the lithium-containing composite oxide, the sulfate ions are preferably present in an amount of greater than or equal to 0.02 mol% and less than or equal to 0.7 mol% with respect to the molar amount of the lithium-containing composite oxide. Furthermore, on the surface of the primary particle of the lithium-containing composite oxide, the sulfate ions are more preferably present in an amount of greater than or equal to 0.02 mol% and less than or equal to 0.2 mol% with respect to the molar amount of the lithium-containing composite oxide.

In addition, a molar ratio of the metal element M to the sulfate ions present on the surface of the primary particle of the lithium-containing composite oxide is preferably 95 : 5 to 75 : 25 from the viewpoint of further suppressing at least one of a decrease in battery capacity, an increase in charge transfer resistance, and deterioration of charge and discharge cycle characteristics.

The lithium-containing composite oxide may contain elements other than Ni as long as the lithium-containing composite oxide contains greater than or equal to 85 mol% of Ni with respect to the total molar amount of metal elements excluding lithium (that is, Ni and elements other than Ni may be incorporated into the crystal structure of the lithium-containing composite oxide). The lithium-containing composite oxide may contain, for example, Co, Mn, Al, Zr, B, Mg, Sc, Y, Ti, Fe, Cu, Zn, Cr, Pb, Sn, Na, K, Ba, Sr, Ca, W, Mo, Nb, Si, or the like, in addition to Li and Ni. Among them, for example, the lithium-containing composite oxide preferably contains at least one of Al and Mn from the viewpoint of suppressing deterioration of charge and discharge cycle characteristics.

An example of the method for producing a positive electrode active material will be described. The method for producing a positive electrode active material includes a step of adding and mixing an oxide containing greater than or equal to 85 mol% of Ni with respect to the total molar amount of constituent metal elements, a lithium compound, aluminum sulfate, and a hydroxide containing a metal element M (M is at least one of Mg, Ca, Sr, Na, K, Zr, Co, Nb, W, and Mo) so as to have a predetermined ratio, and baking the obtained mixture. In the step, an addition amount of the hydroxide containing the metal element M is greater than or equal to 0.01 mol% and less than or equal to 2.0 mol% with respect to the molar amount of the oxide containing Ni, and an addition amount of the aluminum sulfate is greater than or equal to 0.2 mol% with respect to the molar amount of the oxide containing Ni.

As described above, the aluminum sulfate and the hydroxide containing the metal element M are mixed with the oxide containing Ni and the lithium compound at a predetermined ratio, and the mixture is baked, such that it is possible to obtain a positive electrode active material in which an Al concentration in the vicinity of the surface of the secondary particle of the lithium-containing composite oxide is higher than an Al concentration in the central portion of the secondary particle, and on the surface of the primary particle of the lithium-containing composite oxide, a metal element M (M is at least one of Mg, Ca, Sr, Na, K, Zr, Co, Nb, W, and Mo) and sulfate ions are present in amounts of greater than or equal to 0.01 mol% and less than or equal to 2.0 mol% and greater than or equal to 0.02 mol%, respectively, with respect to the molar amount of the lithium composite oxide.

Examples of the method for mixing the raw materials include mixing using a known mixing machine such as a mixer. A baking temperature of the mixture is preferably, for example, in a range of higher than or equal to 600°C and lower than or equal to 900°C. In addition, a baking atmosphere is preferably an oxygen atmosphere or the atmosphere. A baking time of the mixture is preferably, for example, in a range of longer than or equal to 6 hours and shorter than or equal to 30 minutes.

The baked product obtained by baking the mixture is preferably washed with pure water or the like. However, there is a possibility that sulfate ions present on the surface of the primary particle may flow out by washing. Therefore, it is required to adjust the washing frequency and time so that the sulfate ions remaining on the surface of the primary particle of the lithium-containing composite oxide do not become less than 0.02 mol% with respect to the molar amount of the lithium-containing composite oxide.

### [Negative Electrode]

The negative electrode 12 includes a negative electrode current collector and a negative electrode mixture layer provided on a surface of the negative electrode current collector. As the negative electrode current collector, a foil of a metal stable in a potential range of the negative electrode 12, such as copper, a film in which the metal is disposed on a surface layer, or the like can be used. The negative electrode mixture layer is preferably provided on both surfaces of the negative electrode current collector. The negative electrode mixture layer contains, for example, a negative electrode active material and a binder. The negative electrode 12 can be manufactured by applying a negative electrode mixture slurry containing a negative electrode active material, a binder, and the like on the negative electrode current collector, drying and then rolling the coating film, and forming a negative electrode mixture layer on the negative electrode current collector.

The negative electrode active material is not particularly limited as long as it is a material capable of reversibly occluding and releasing lithium ions, and preferably includes a carbon-based active material. A preferred carbon-based active material is natural graphite such as flake graphite, massive graphite, and earthy graphite, and artificial graphite such as massive artificial graphite (MAG) and graphitized mesophase carbon microbeads (MCMB). In addition, the negative electrode active material may include a Si-based active material composed of at least one of Si and a Si-containing compound.

As the binder, for example, as in the case of the positive electrode 11, a fluororesin, PAN, polyimide, an acrylic resin, a polyolefin, or the like can be used, and examples thereof include styrene-butadiene rubber (SBR), CMC or a salt thereof, polyacrylic acid (PAA) or a salt thereof, and polyvinyl alcohol (PVA).

### [Separator]

For example, a porous sheet having an ion permeation property and an insulation property is used for the separator 13. Specific examples of the porous sheet include a fine porous thin film, a woven fabric, and a non-woven fabric. As a material of the separator 13, a polyolefin such as polyethylene or polypropylene, cellulose, and the like are preferable. The separator 13 may have either a single-layered structure or a multi-layered structure. A heat resistant layer or the like may be formed on a surface of the separator.

### EXAMPLES

Hereinafter, the present disclosure will be further described with reference to Examples, and the present disclosure is not limited to these Examples.

### <Example 1>

### [Synthesis of Positive Electrode Active Material]

A nickel-aluminum-manganese composite oxide represented by Ni_{0.90}Al_{0.05}Mn_{0.05}O₂, lithium hydroxide, and a mixture obtained by mixing aluminum sulfate (Al₂(SO₄)₃) and calcium hydroxide at a molar ratio of 3:7 were mixed so that a molar ratio was 1: 1:0.0075. The mixture was baked under an oxygen stream at 700°C for 20 hours to obtain a positive electrode active material containing a lithium-containing composite oxide. The positive electrode active material was washed with water and dried, and used as a positive electrode active material of Example 1. The obtained positive electrode active material was subjected to various analyses by the following procedure.

After adding 1 g of the obtained positive electrode active material to 50 mL of pure water and stirring the mixture for 24 hours, ion chromatography was performed on the filtered water to measure a concentration of sulfate ions present on a surface of a primary particle of the lithium-containing composite oxide. As a result, the sulfate ions present on the surface of the primary particle of the lithium-containing composite oxide was 0.05 mol% with respect to the molar amount of the lithium-containing composite oxide.

When the particle surface of the obtained positive electrode active material was measured using TEM-EDX, it was confirmed that Ca was present on the surface of the primary particle of the lithium-containing composite oxide. Then, 100 mg of the obtained positive electrode active material was dissolved in 18% hydrochloric acid, the obtained dissolution solution was quantitatively determined to 100 mL, and the amount of Ca in the dissolution solution was measured using an ICP emission spectrophotometer (trade name "iCAP 6300" manufactured by Thermo Fisher Scientific Inc.). As a result of determining a concentration of calcium present on the surface of the primary particle of the lithium-containing composite oxide from the measured value, the concentration of calcium was 0.5 mol% with respect to the molar amount of the lithium-containing composite oxide. Note that the composition (Ni, Al, Mn, and Co) of the obtained positive electrode active material was analyzed by an ICP emission spectrometer (the results are shown in Table 1).

In addition, the obtained positive electrode active material was embedded in a resin, the particle of the positive electrode active material was subjected to cross-section processing using a cross-section polisher (CP) method, and the polished surface was analyzed using an energy dispersive X-ray analyzer (SEM-EDX), thereby measuring Al concentrations in the vicinity of the surface and in the central portion of the secondary particle of the lithium-containing composite oxide. As a result, the Al concentration in the vicinity of the surface of the secondary particle of the lithium-containing composite oxide was 1.4 times the Al concentration in the central portion of the secondary particle of the lithium-containing composite oxide.

### [Manufacture of Positive Electrode]

The positive electrode active material, acetylene black, and polyvinylidene fluoride were mixed at a mass ratio of 100:1:1, and an appropriate amount of N-methyl-2-pyrrolidone (NMP) was added to the mixture to prepare a positive electrode mixture slurry. Next, the positive electrode mixture slurry was applied onto both surfaces of a positive electrode current collector formed of an aluminum foil, the coating film was dried and rolled, and then the coating film was cut into a predetermined electrode size, thereby obtaining a positive electrode in which a positive electrode mixture layer was formed on both surfaces of a positive electrode current collector.

### [Manufacture of Negative Electrode]

A negative electrode mixture slurry obtained by mixing artificial graphite as a negative electrode active material, CMC, and SBR at a mass ratio of 100:1:1 was applied to both surfaces of a negative electrode current collector formed of a copper foil, the coating film was dried and rolled, and then the coating film was cut into a predetermined electrode size, thereby manufacturing a negative electrode in which a negative electrode mixture layer was formed on both surfaces of a negative electrode current collector.

### [Preparation of Non-Aqueous Electrolyte]

Ethylene carbonate (EC), methylethyl carbonate (MEC), and dimethyl carbonate (DMC) were mixed at a volume ratio of 3:3:4. LiPF₆ was dissolved in the mixed solvent so as to have a concentration of 1.2 mol/L to prepare a non-aqueous electrolyte.

### [Manufacture of Battery]

A positive electrode lead was attached to the positive electrode, a negative electrode lead was attached to the negative electrode, and in a state where a separator was disposed between both the electrodes, the positive electrode lead and the negative electrode lead were spirally wound to produce an electrode assembly. The electrode assembly and the non-aqueous electrolyte were enclosed in an exterior body formed of an aluminum laminate, and then the exterior body was sealed to manufacture a battery.

### <Example 2>

A battery was manufactured in the same manner as in Example 1, except that in the synthesis of the positive electrode active material, a mixture obtained by mixing aluminum sulfate and magnesium hydroxide at a molar ratio of 2:8 was used, and a nickel-aluminum-manganese composite oxide, lithium hydroxide, and the mixture were mixed so that a molar ratio was 1:1:0.0195.

### <Example 3>

A battery was manufactured in the same manner as in Example 1, except that in the synthesis of the positive electrode active material, a mixture obtained by mixing aluminum sulfate and strontium hydroxide at a molar ratio of 4:6 was used, and a nickel-aluminum-manganese composite oxide, lithium hydroxide, and the mixture were mixed so that a molar ratio was 1:1:0.0034.

### <Example 4>

A battery was manufactured in the same manner as in Example 1, except that in the synthesis of the positive electrode active material, a mixture obtained by mixing aluminum sulfate and calcium hydroxide at a molar ratio of 3:7 was used, and a nickel-aluminum-manganese composite oxide, lithium hydroxide, and the mixture were mixed so that a molar ratio was 1:1:0.015.

### <Example 5>

A battery was manufactured in the same manner as in Example 1, except that in the synthesis of the positive electrode active material, a mixture obtained by mixing aluminum sulfate and calcium hydroxide at a molar ratio of 4:6 was used, and a nickel-aluminum-manganese composite oxide, lithium hydroxide, and the mixture were mixed so that a molar ratio was 1:1:0.015.

### <Example 6>

A battery was manufactured in the same manner as in Example 1, except that in the synthesis of the positive electrode active material, a mixture obtained by mixing aluminum sulfate and strontium hydroxide at a molar ratio of 4:6 was used, and a nickel-aluminum-manganese composite oxide, lithium hydroxide, and the mixture were mixed so that a molar ratio was 1:1:0.0072.

### <Example 7>

A battery was manufactured in the same manner as in Example 1, except that in the synthesis of the positive electrode active material, a mixture obtained by mixing aluminum sulfate and strontium hydroxide at a molar ratio of 3:7 was used, and a nickel-aluminum-manganese composite oxide, lithium hydroxide, and the mixture were mixed so that a molar ratio was 1:1:0.0056.

### <Example 8>

A battery was manufactured in the same manner as in Example 1, except that in the synthesis of the positive electrode active material, a nickel-cobalt-aluminum composite oxide represented by Ni_{0.9}Co_{0.05}Al_{0.05}O₂ was used, a mixture obtained by mixing aluminum sulfate and calcium hydroxide at a molar ratio of 4:6 was used, and a nickel-cobalt-aluminum composite oxide, lithium hydroxide, and the mixture were mixed so that a molar ratio was 1:1:0.0078.

### <Example 9>

A battery was manufactured in the same manner as in Example 1, except that in the synthesis of the positive electrode active material, a nickel-cobalt-aluminum-manganese composite oxide represented by Ni_{0.9}Co_{0.048}Al_{0.002}Mn_{0.05}O₂ was used, a mixture obtained by mixing aluminum sulfate and calcium hydroxide at a molar ratio of 3:7 was used, and a nickel-cobalt-aluminum-manganese composite oxide, lithium hydroxide, and the mixture were mixed so that a molar ratio was 1:1:0.0073.

### <Comparative Example 1>

A battery was manufactured in the same manner as in Example 1, except that in the synthesis of the positive electrode active material, a mixture of aluminum sulfate and calcium hydroxide was not used, and a nickel-aluminum-manganese composite oxide and lithium hydroxide were mixed so that a molar ratio was 1: 1.

### <Comparative Example 2>

A battery was manufactured in the same manner as in Example 1, except that in the synthesis of the positive electrode active material, a mixture of aluminum sulfate and calcium hydroxide was not used, and a nickel-aluminum-manganese composite oxide, lithium hydroxide, and calcium hydroxide were mixed so that a molar ratio was 1:1:0.005.

### <Comparative Example 3>

A battery was manufactured in the same manner as in Example 1, except that in the synthesis of the positive electrode active material, a mixture of aluminum sulfate and calcium hydroxide was not used, and a nickel-aluminum-manganese composite oxide, lithium hydroxide, and aluminum sulfate were mixed so that a molar ratio was 1:1:0.0025.

### [Discharge Capacity]

Each of the batteries of Examples and Comparative Examples was subjected to constant current charge at 0.2 C until a cell voltage reached 4.2 V, and then was subjected to constant voltage charge at 4.2 V until a current value reached 0.01 C, under a temperature environment at 25°C. Next, constant current discharge was performed at 0.2 C until a cell voltage reached 2.5 V The discharge capacity at this time is summarized in Table 1.

### [Charge Transfer Resistance]

After each of the batteries of Examples and Comparative Examples was charged under the charging conditions described above, alternating current impedance measurement was performed in a range of 10 mHz to 100 kHz to create a Cole-Cole plot. The charge transfer resistance was determined from the size of a substantially semicircle appearing in the obtained Cole-Cole plot. The results are summarized in Table 1.

### [Charge and Discharge Cycle Characteristics]

Each of the batteries of Examples and Comparative Examples was subjected to constant current charge at 0.2 C until a cell voltage reached 4.2 V, and then was subjected to constant voltage charge at 4.2 V until a current value reached 0.02 C, under a temperature environment at 25°C. Next, constant current discharge was performed at 0.2 C until a cell voltage reached 2.5 V The charge and discharge cycle was repeated 100 cycles, and a capacity retention rate in the charge and discharge cycle was determined by the following equation. The results are summarized in Table 1. Note that, as the value of the capacity retention rate is higher, the deterioration of the charge and discharge cycle characteristics is further suppressed. Capacity retention rate = (100th cycle discharge capacity/1st cycle discharge capacity) × 100

**[Table 1]**

| | Li-containing composite oxide composition (mol%) | | | | Al concentration in vicinity of surface of secondary particle/Al concentration in central portion | Metal element on surface of primary particle | | Sulfate ions on surface of primary particle | Discharge capacity | Charge transfer resistance | Capacity retention rate |
|---|---|---|---|---|---|---|---|---|---|---|---|
| | Ni | Co | Al | Mn | | Type | Concentration mol% | Concentration mol% | mAh/g | mΩ | % |
| Example 1 | 90 | 0 | 5 | 5 | 1.4 | Ca | 0.5 | 0.05 | 214 | 35 | 94 |
| Example 2 | 90 | 0 | 5 | 5 | 1.7 | Mg | 1.6 | 0.1 | 212 | 42 | 96 |
| Example 3 | 90 | 0 | 5 | 5 | 1.2 | Sr | 0.2 | 0.03 | 218 | 37 | 92 |
| Example 4 | 90 | 0 | 5 | 5 | 1.8 | Ca | 1.1 | 0.1 | 213 | 29 | 97 |
| Example 5 | 90 | 0 | 5 | 5 | 1.1 | Ca | 0.1 | 0.02 | 220 | 48 | 92 |
| Example 6 | 90 | 0 | 5 | 5 | 1.5 | Sr | 0.4 | 0.06 | 214 | 35 | 93 |
| Example 7 | 90 | 0 | 5 | 5 | 1.3 | Sr | 0.4 | 0.04 | 216 | 43 | 93 |
| Example 8 | 90 | 5 | 5 | 0 | 1.4 | Ca | 0.5 | 0.06 | 219 | 21 | 96 |
| Example 9 | 90 | 4.8 | 0.2 | 5 | 9.0 | Ca | 0.5 | 0.05 | 217 | 24 | 95 |
| Comparative Example 1 | 90 | 0 | 5 | 5 | 1.0 | - | - | 0 | 208 | 84 | 85 |
| Comparative Example 2 | 90 | 0 | 5 | 5 | 1.0 | Ca | 0.5 | 0.01 | 203 | 61 | 89 |
| Comparative Example 3 | 90 | 0 | 5 | 5 | 1.4 | - | - | 0.05 | 198 | 75 | 83 |

All of the batteries of Examples 1 to 9 showed the high discharge capacity, the low charge transfer resistance, and the high capacity retention rate as compared with the batteries of Comparative Examples 1 to 3. From these results, a positive electrode active material in which an Al concentration in the vicinity of a surface of a secondary particle of a lithium composite oxide is higher than an Al concentration in the central portion of the secondary particle, a metal element present on a surface of a primary particle of the lithium-containing composite oxide is greater than or equal to 0.01 mol% and less than or equal to 2.0 mol% with respect to a molar amount of the lithium-containing composite oxide, and sulfate ions present on the surface of the primary particle of the lithium composite oxide is greater than or equal to 0.02 mol% with respect to the molar amount of the lithium-containing composite oxide, such that it is possible to provide a high capacity secondary battery having low charge transfer resistance and excellent charge and discharge cycle characteristics.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material for a secondary battery, comprising a lithium-containing composite oxide composed of secondary particles in which primary particles are aggregated,
wherein the lithium composite oxide contains greater than or equal to 85 mol% of Ni with respect to the total molar amount of metal elements excluding lithium, and Al,
an Al concentration in the vicinity of a surface of the secondary particle is higher than an Al concentration in the central portion of the secondary particle, and
a metal element M (M is at least one of Mg, Ca, Sr, Na, K, Zr, Co, Nb, W, and Mo) and sulfate ions are present on a surface of the primary particle in amounts of greater than or equal to 0.01 mol% and less than or equal to 2.0 mol% and greater than or equal to 0.02 mol%, respectively, with respect to a molar amount of the lithium-containing composite oxide.

2. The positive electrode active material for a secondary battery according to claim 1, wherein a molar ratio of the metal element M to the sulfate ions is 95 : 5 to 75 : 25.

3. The positive electrode active material for a secondary battery according to claim 1 or 2, wherein the lithium composite oxide contains at least one of Al and Mn.

4. A method for producing a positive electrode active material for a secondary battery, the method comprising a step of adding and mixing an oxide containing greater than or equal to 85 mol% of Ni with respect to the total molar amount of constituent metal elements, a lithium compound, aluminum sulfate, and a hydroxide containing a metal element M (M is at least one of Mg, Ca, Sr, Na, K, Zr, Co, Nb, W, and Mo), and baking the mixture,
wherein an addition amount of the hydroxide containing the metal element M is greater than or equal to 0.01 mol% and less than or equal to 2.0 mol% with respect to a molar amount of the oxide containing Ni, and an addition amount of the aluminum sulfate is greater than or equal to 0.2 mol% with respect to the molar amount of the oxide containing Ni.
